# EUROPEAN PATENT SPECIFICATION

(11) **EP 3 372 526 B1**
(45) Date of publication and mention of the grant of the patent: **12.10.2022**
(21) Application number: 18250006.6
(22) Date of filing: 31.01.2018
(51) Int. Cl.: B65D 81/20, A47J 47/10, B65B 31/04, B65D 43/02

(54) **CONTAINER COVER THAT FACILITATES CREATING NEGATIVE PRESSURE AND LONG TIME SEALING**
BEHÄLTERDECKEL ZUR ERLEICHTERUNG DER ERZEUGUNG VON UNTERDRUCK UND LANGZEITABDICHTUNG
COUVERCLE DE RÉCIPIENT FACILITANT LA CRÉATION D'UNE PRESSION NÉGATIVE ET D'UN SCELLEMENT À LONG TERME

(30) Priority: 10.03.2017 TW 106203394 U
(43) Date of publication of application: 12.09.2018
(73) Proprietor: Shin Hung Yih Technology Co., Ltd., Taipei City (TW)
(72) Inventor: YI-HUNG, Ho, Taipei City (TW)
(74) Representative: Cabinet Chaillot

(56) References cited:
- EP-A1- 1 350 737
- CN-U- 206 842 124
- US-A1- 2005 115 632
- US-A1- 2005 244 293

## Description

### BACKGROUND OF THE INVENTION

The present invention relates to negative pressure storage container technology and more particularly, to a container cover that enables a pumping piston to pump air out of a container on which the container cover is covered after the user rotates a rotary device.

US Patent Number 9,296,542, issued to the present inventor, discloses a vacuum storage container, which includes a container housing, a drawer mounted in the container housing and movable between a closed position and an open position, a rotary knob pivotally mounted in a door cover of the drawer, clockwork coupled to the rotary knob, a drive gear affixed to the rotary knob, a transmission gear set rotatable by the drive gear, an eccentric wheel rotatable by the transmission gear set, a pumping pump mounted in the drawer and coupled to the eccentric wheel for creating a vacuum in the container housing, an ejection mechanism adapted for ejecting the drawer out of the container housing, and an operating member control mechanism adapted for locking the drawer to the container housing and operable to unlock the drawer for enabling the drawer to be ejected out of the container housing by the ejection mechanism. Since the transmission gear set is arranged in a transverse direction, if you want to use the container cover in a cylindrical can, a barrel or a bottle-like container, the container cover will occupy a large transverse space of the container.

Further, in the use of a conventional mechanical type vacuum storage container, when the internal air of the storage container leaks out, the storage container cannot be automatically inflated. There are electronic type negative pressure storage containers commercially available. However, if the internal air of an electronic type negative pressure storage container leaks out, a vacuum pumping operation must be performed again, bringing inconvenience. In addition, if the wine in a decanter is not finished soon, it is easy to oxidize and to mature quickly and clumsily, soon deteriorating into a worse state. Further, if a drink in a vessel is not finished, it is pity to discard the drink. Further, people may use a sealing container to store food ingredients. However, because the internal storage chamber of the sealing container is not maintained in a negative pressure status, the sealing container cannot keep the storage food ingredients fresh for long.

Further existing vacuum storage containers are disclosed in patent applications EP1350737, US2005/115632 and US2005/0244293. These each disclose a vacuum storage container assembly having a cover with a pump member seated in the cap above an inlet to pump air out from the container. The claims hereinafter are characterized over US2005/115632.

### SUMMARY OF THE INVENTION

The present invention has been accomplished under the circumstances in view. It is therefore the main object of the present invention to provide a container cover according to claim 1, consisting of a rotary device, an outer cover member, an inner cover member, a first guide block, second guide block, a pumping piston and a piston seat, and adapted for covering a storage container. The component parts are so arranged that when the rotary device is driven by a user to rotate the first guide block, guide rods of the first guide block are moved along a first continuous wave-shaped track of the second guide block, causing the second guide block and the pumping piston to move alternatively up and to further pump air out of the storage container through an air-pumping hole of the piston seat to create a negative pressure. Thus, the container cover of the invention has the characteristics of simple structure, space saving a wide application range.

Further, the container cover can be configured for covering a vacuum storage can, vacuum storage box, vacuum storage bottle, decanter, or any of a variety of storage containers of different shapes and sizes, facilitating creation of a negative pressure in the storage container. When a certain level of negative pressure is created in the storage container, the storage food ingredients and eatable items in the storage container can be maintained fresh, avoiding ruptured storage items due to moisture or oxidation. Preferably, the container cover further comprises a relief valve rod. The relief valve rod has the top end thereof capped with a flexible end cap. When a negative pressure is created in the storage container, the flexible end cap will curve down, giving a visual indication of the presence of the negative pressure in the storage container.

### BRIEF DESCRIPTION OF THE DRAWING

Fig. 1 is an exploded view of a container cover in accordance with a first embodiment of the present invention.
Fig. 2 is an enlarged view of a part of Fig. 2.
Fig. 3 is an oblique bottom elevational view of the container cover in accordance with the first embodiment of the present invention.
Fig. 4 is a sectional elevational applied view of the first embodiment of the present invention, illustrating the container cover covered a storage container.
Fig. 5 is an exploded view of the container cover and the storage container in accordance with the first embodiment of the present invention.
Fig. 6 is an oblique top elevational assembly view of Fig. 5.
Fig. 7 is a schematic sectional view of a part of the first embodiment of the present invention, illustrating the guide rods disposed at the low-elevation points of the continuous wave-shaped track.
Fig. 8 is similar to Fig. 7, illustrating the guide rods disposed at the high-elevation points of the continuous wave-shaped track.
Fig. 9 is a schematic sectional view of the first embodiment of the present invention, illustrating the arrangement of the relief valve rod and the surrounding component parts.
Fig. 10 corresponds to Fig. 9 after creation of a negative pressure in the storage container.
Fig. 11 corresponds to Fig. 9, illustrating the relief valve rod pressed down.
Fig. 12 is a schematic applied view of the first embodiment of the present invention, illustrating the container cover covered a decanter.
Fig. 13 is a schematic sectional view of an embodiment not forming part of the present invention where the upper rail seat is eliminated.
Fig. 14 is a schematic sectional view of the first embodiment of the present invention where the spring member is eliminated.
Fig. 15 is schematic sectional view of the first embodiment of the present invention, illustrating the position of the relief valve rod changed and the top end of the relief valve rod faced toward the rotary device.
Fig. 16 is a schematic sectional view of a container cover in accordance with a second embodiment of the present invention.
Fig. 17 is a circuit block diagram of the motor module, power supply module and switch control module of the second embodiment of the present invention.

### DETAILED DESCRIPTION OF THE INVENTION

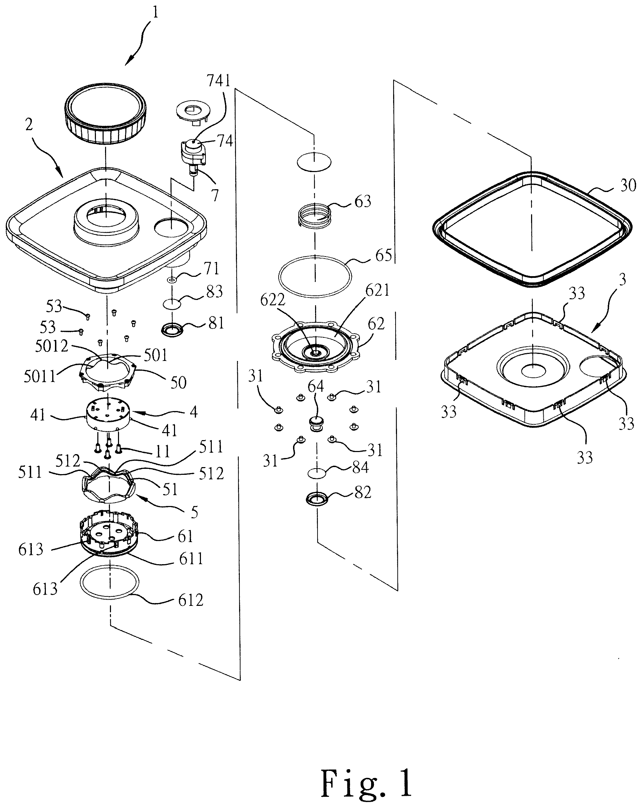

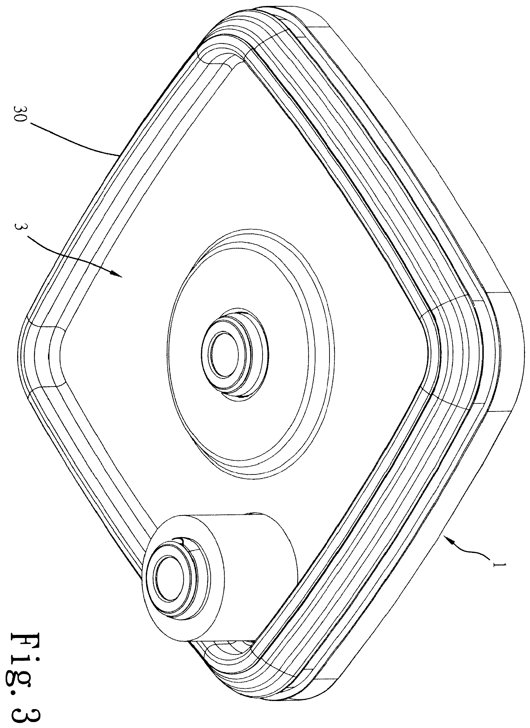

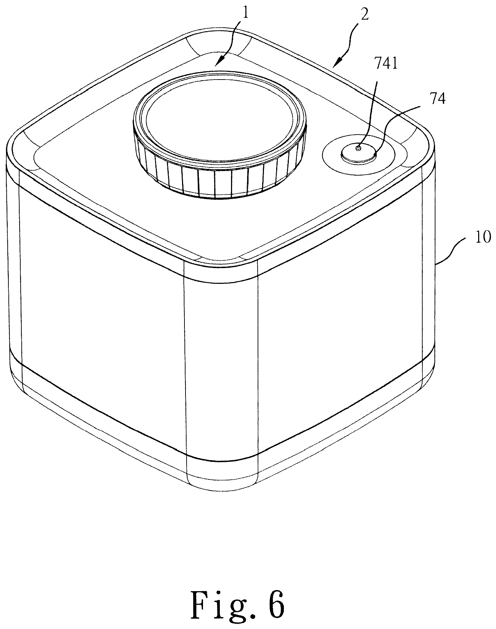

Referring to Figs. 1-11, a container cover that facilitates creating negative pressure and long time sealing in accordance with a first embodiment of the present invention is shown. The container cover of this first embodiment comprises a rotary device 1, an outer cover member 2, an inner cover member 3, a first guide block 4, a second guide block 5, a pumping piston 61, and a piston seat 62, and a check valve 64.

The rotary device 1 in this embodiment is a rotary knob rotatably coupled to the outer cover member 2 and fastened to the first guide block 4 with a plurality of first fasteners 11 or other fastening means.

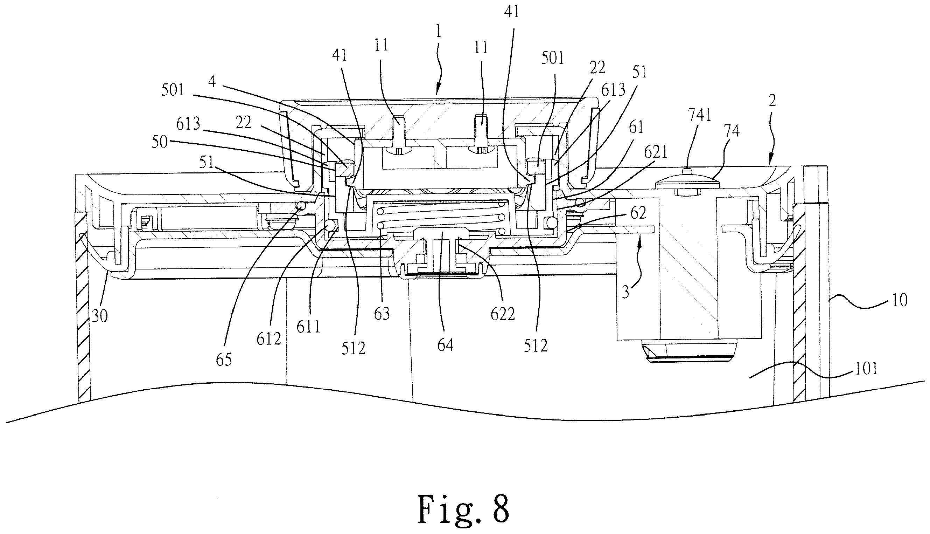

The outer cover member 2 is fixedly connected to the inner cover member 3 by means of latches (not shown) and mating latch holes 33 or other fastening means. Further, the outer cover member 2 has a plurality of axially extending guide grooves 22 (see Fig. 8).

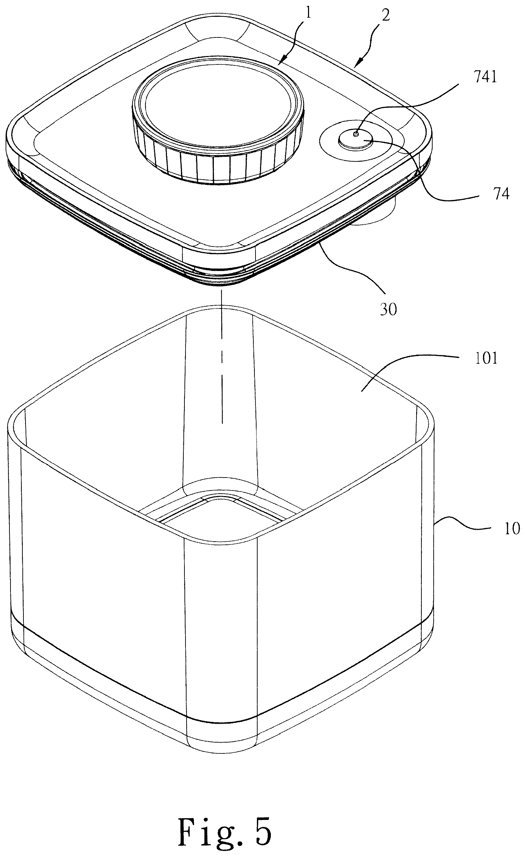

The inner cover member 3 is connected to the outer cover member 2 with a packing gasket 30 sealed therebetween so that when the inner cover member 3 is covered with the outer cover member 2 onto an opening 101 of a storage container 10 (see Figs. 5-8). The storage container 10 can be kept in an airtight condition.

The first guide block 4 has a plurality of guide rods 41. The second guide block 5 has a first continuous wave-shaped track 51 disposed in contact with the guide rods 41. Thus, when the first guide block 4 is being rotated with the rotary device (rotary knob ) 1, the guide rods 41 are moved along the first continuous wave-shaped track 51 of the second guide block 5, causing the second guide block 5 to be moved up and down. Further, the second guide block 5 fastened to the pumping piston 61 with third fasteners 53 or other fastening means.

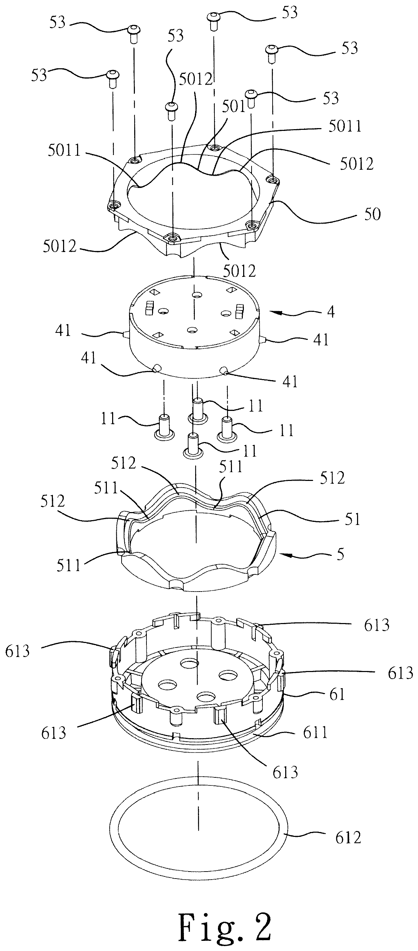

The pumping piston 61 comprises a plurality of constraint blocks 613 (see Fig. 2) respectively coupled to the axially extending guide grooves 22 of the outer cover member 2 (see Fig. 8) for vertical movement. The pumping piston 61 is adapted for reciprocation in a piston groove 621 of the piston seat 62 axially. The pumping piston 61 further comprises an external mounting groove 5 extended around the periphery thereof for the mounting of a first gasket ring 612.

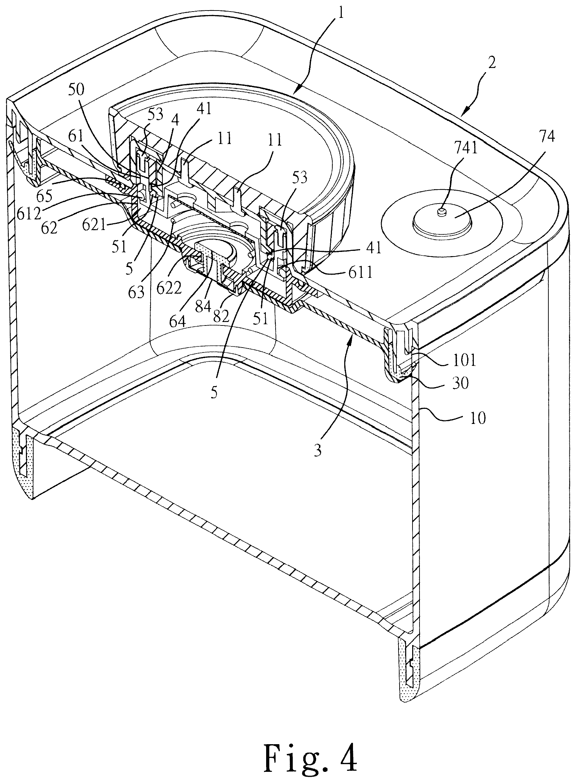

The piston seat 62 is fastened to the cover member 2 with a plurality of second fasteners 31 or other fastening means, comprising a piston groove 621 that accommodates the pumping piston 61 and allows the pumping piston 61 to reciprocate therein, a second gasket ring 65 mounted around the periphery thereof, and an air-pumping hole 622 cut through a bottom wall thereof (see Fig. 4 and Figs. 7 and 8). The check valve 64 is mounted in the air-pumping hole 622.

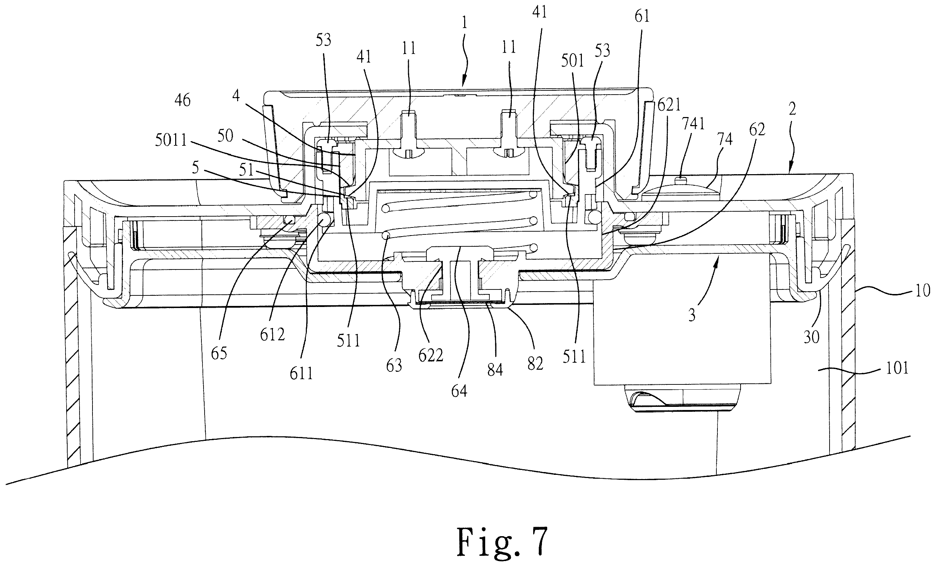

Thus, when the user operates the rotary device (rotary knob) 1 to rotate the first guide block 4, the guide rods 41 of the first guide block 4 are moved along the first continuous wave-shaped track 51 of the second guide block 5, causing the second guide block 5 and the connected pumping piston 61 to move alternatively up and down along the piston groove 621 of the piston seat 62 (see Figs. 7 and 8). During the reciprocating movement of the pumping piston 61, air is drawn out of the storage container 10 through the air-pumping hole 622 of the piston seat 62, causing reaction of a negative pressure in the storage container 10, and thus, the foods stored in the storage container 10 such as red wine, beverages, fruits, biscuits and other ingredients can be maintained fresh and well protected against oxidation.

The container cover may further comprise a first spring member 63 supported between the pumping piston 61 and the piston groove 621 of the piston seat 62 (see Figs. 7 and 8) to balance the axial movement of the pumping piston 61.

In the air-drawing stroke during the reciprocating motion of the piston 61, the load is heavy. On the contrary, in the return action during the reciprocating motion of the piston 61, the load is light. Subject to the arrangement of the first spring member 63, the user's hand can feel smooth when rotating the rotary device (rotary knob) 1.

Further, an upper rail seat 50 is fastened to the second guide block 5 and the pumping piston 61 by the aforesaid third fasteners 53. The upper rail seat 50 defines a second continuous wave-shaped track 501. The guide rods 41 of the first guide block 4 are supported between the second continuous wave-shaped track 501 of the upper rail seat 50 and the first continuous wave-shaped track 51 of the second guide block 5 for smooth movement.

As illustrated in Fig. 2, the first continuous wave-shaped track 51 of the second guide block 5 comprises a plurality of low-elevation points 511 and a plurality of high-elevation points 512, wherein each low-elevation point 511 rises gradually to one respective high-elevation point 512; each high-elevation points 512 descends gradually to one respective low-elevation point 511.

Further, as illustrated in Fig. 2, the second continuous wave-shaped track 501 of the upper rail seat 50 comprises a plurality of low-elevation points 5011 and a plurality of high-elevation points 5012, wherein each low-elevation point 5011 rises gradually to one respective high-elevation point 5012; each high-elevation point 5012 descends gradually to one respective low-elevation point 5011.

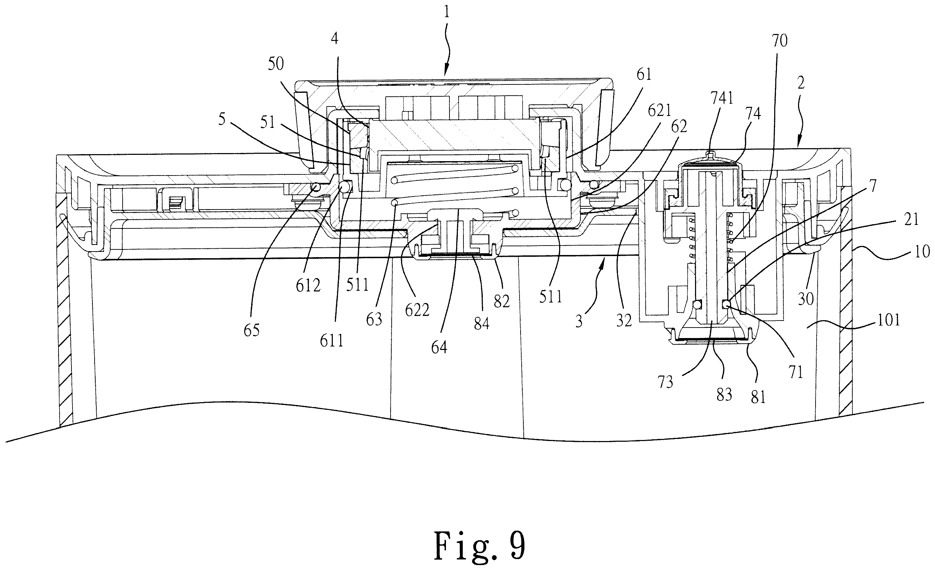

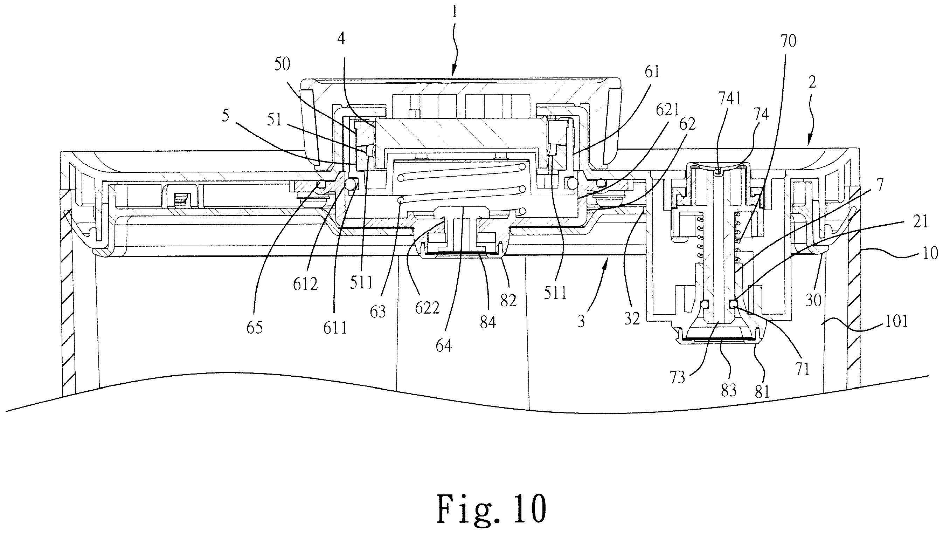

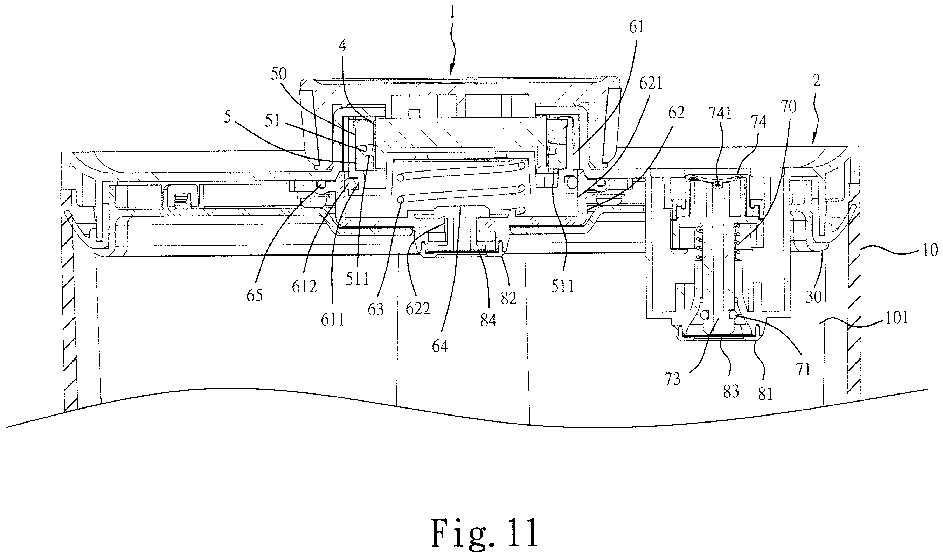

Further, as illustrated in Figs. 9-11, the outer cover member 2 further comprises a relief hole 21 (see Fig. 9); the inner cover member 3 further comprises a through hole 32 (see Fig. 9) corresponding to the relief hole 21. Further, a relief valve rod 7 is mounted with a gasket ring 71, and movable to close the relief hole 21 of the outer cover member 2 (see Figs. 9 and10) or open relief hole 21 of the outer cover member 2 (see Fig. 11). Further, a second spring member 70 is mounted between the relief valve rod 7 and the relief hole 21 of the outer cover member 2, and adapted for imparting an elastic restoring energy to the relief valve rod 7 (see Fig. 10) to force the gasket ring 71 against the relief hole 21 of the outer cover member 2 when the container cover is capped on the storage container 10 and a negative pressure is created in the storage container 10. Further, when the relief valve rod 7 is pressed down by an external force (see Fig. 11), a gap is created between the gasket ring 71 and the relief hole 21 of the outer cover member 2 for discharge of the negative pressure. When the applied force is released from the relief valve rod 7, the elastic restoring energy of the second spring member 70 immediately pushes the relief valve rod 7 upward (see Fig. 9), forcing the gasket ring 71 to stop the relief hole 21. Further, the relief valve rod 7 has an internal channel 73 (see Fig. 9) extending through opposing top and bottom ends thereof. The internal channel 73 has the bottom end thereof disposed in communication with the relief hole 21 of the outer cover member 2, and the opposing top end thereof mounted with a flexible end cap 74 (see Fig. 9). Thus, when a negative pressure is created in the storage container 10 after the container cover covered the storage container 10, the flexible end cap 74 will curve down due to the presence of a suction force in the internal channel 73 (see Fig. 10). The downwardly curving condition of the flexible end cap 74 can be seen, giving a visual negative pressure indication for reference. The flexible end cap 74 has a top protrusion 741 made of a different material or in a different color relative to the body of the flexible end cap 74 for easy visual identification of the presence of a negative pressure in the storage container 10.

Further, as illustrated in Fig. 1 and Fig. 9, dust ring caps 81,82 with respective anti-dust filter meshes 83,84 are respectively mounted in the relief hole 21 of the outer cover member 2 and the air-pumping hole 622 of the piston seat 62, avoiding powder content in the storage container 10 from affecting air tightness or product service life. Further, the dust ring caps 81,82 and the anti-dust filter meshes 83,84 are detachable for easy cleaning or replacement

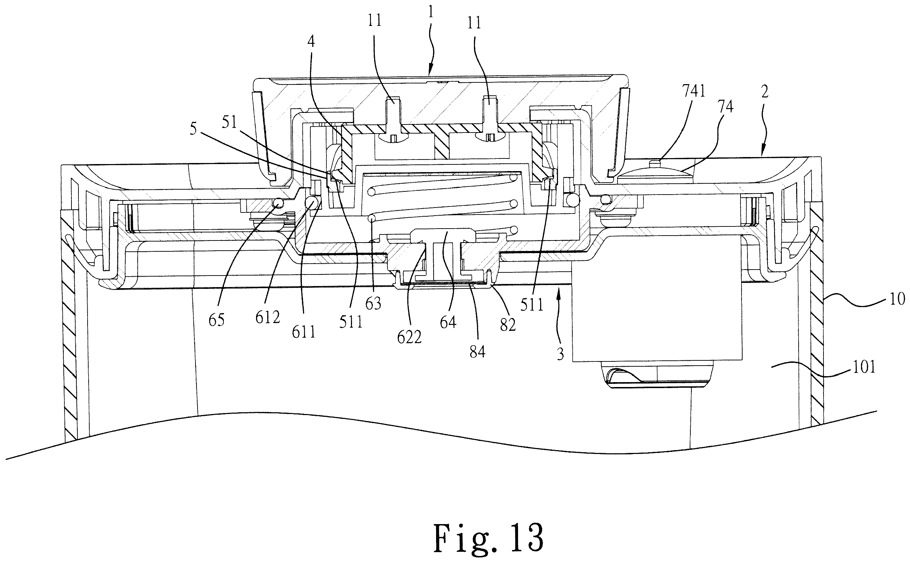

Referring to Fig. 13, in a modification of the first embodiment of the present invention, not forming part of the claimed invention, the aforesaid upper rail seat 50 is eliminated, achieving the same expected effects.

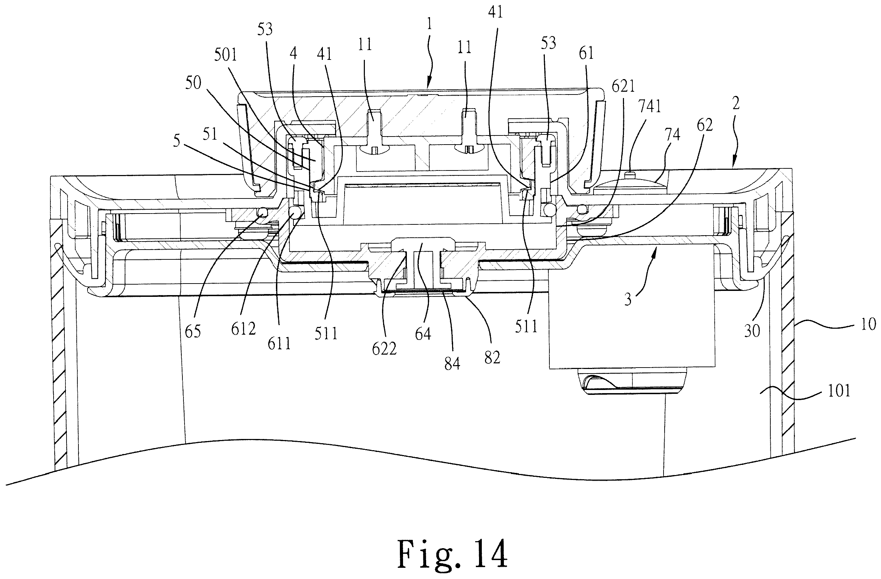

Referring to Fig. 14, in another modification of the first embodiment of the present invention, the first spring member 63 is eliminated, achieving the same expected effects.

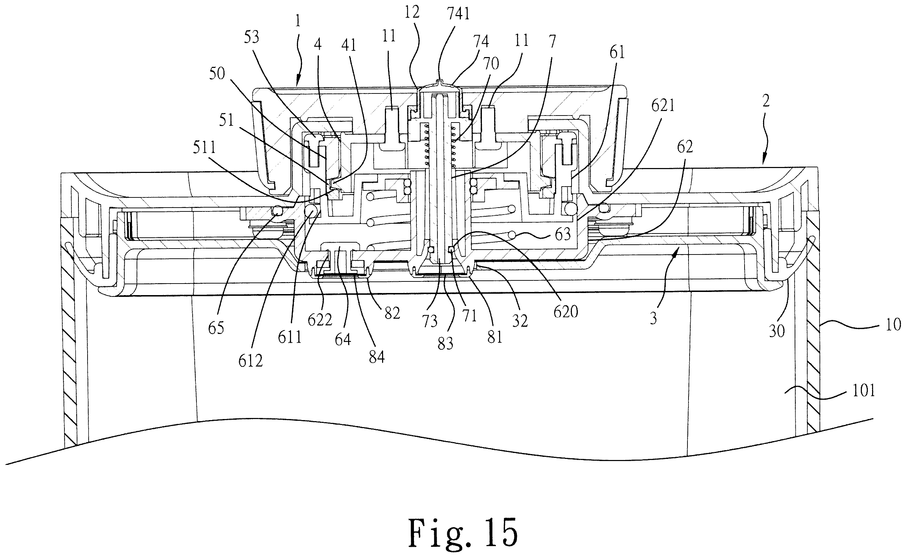

Referring to Fig. 15, in still another modification of the first embodiment of the present invention, the relief valve rod 7 is disposed at a different location with the top end thereof facing toward a through hole 12 in the rotary device (rotary knob ) 1. In this embodiment, the piston seat 6 further comprises a relief hole 620; the relief hole 620 of the piston seat 6 can be blocked or opened by the gasket ring 71 of the relief valve rod 7; a second spring member 70 is supported between the relief valve rod 7 and the relief hole 620 of the piston seat 6 to impart an elastic restoring energy to the piston seat 6, forcing the gasket ring 71 of the relief valve rod 7 into abutment against the relief hole 620 of the piston seat 6 after creation of a negative pressure in the storage container 10. Further, when the relief valve rod 7 is being held down by an external pressure, a gap is created between the gasket ring 71 and the relief hole 620 of the piston seat 6 for discharging air pressure. When released the downward pressure from the relief valve rod 7, the elastic restoring energy of the second spring member 70 immediately pushes the relief valve rod 7 upward, forcing the gasket ring 71 into abutment against the relief hole 620 again. The relief valve rod 7 has an internal channel 73 extending through opposing top and bottom ends thereof. The bottom end of the internal channel 73 is disposed in communication with the relief hole 620 of the piston seat 62. The opposing top end of the relief valve rod 7 is mounted with a flexible end cap 74. Thus, when a negative pressure is created in the storage container 10 after the container cover covered the storage container 10, the flexible end cap 74 will curve down due to a suction force in the internal channel 73 (see Fig. 10). The downwardly curving condition of the flexible end cap 74 can be seen, giving a visual negative pressure indication for reference. The flexible end cap 74 has a top protrusion 741 made of a different material or in a different color relative to the body of the flexible end cap 74 for easy identification of the presence of a negative pressure in the storage container 10.

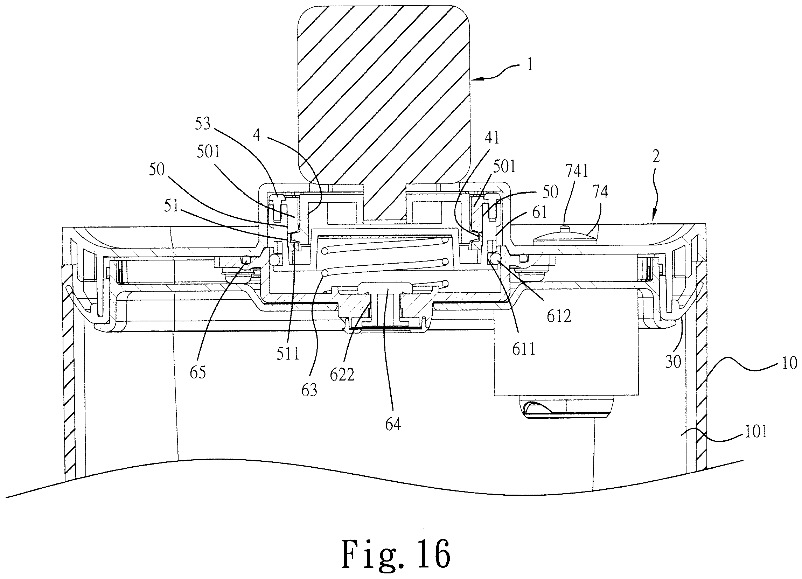

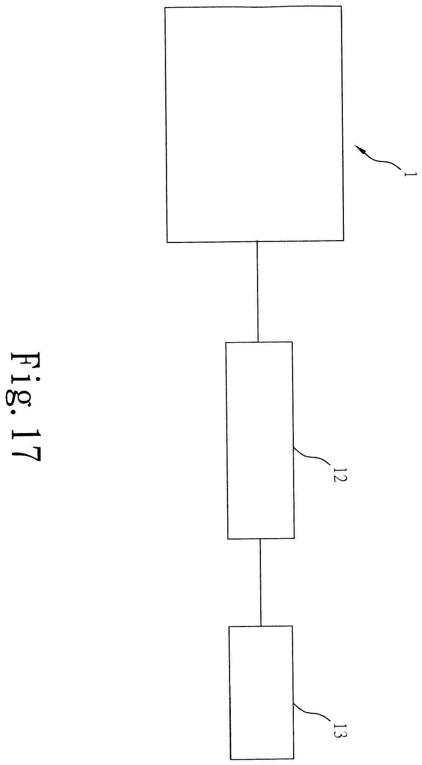

Referring to Figs. 16 and 17, a container cover that facilitates creating negative pressure and long time sealing in accordance with a second embodiment of the present invention is shown. The container cover of this second embodiment is substantially similar to the aforesaid first embodiment with the exception that the rotary device 1 in this second embodiment is a motor module. The rotary device (motor module) 1 is affixed to the first guide block 4 with fasteners (not shown). When the rotary device (motor module) 1 is driven to rotate the first guide block 4, the mating arrangement between the guide rods 41 of the first guide block 4 and the first continuous wave-shaped track 51 of the second guide block 5 causes the second guide block 5 and the pumping piston 61 to move alternatively up and down in the piston groove 621 of the piston seat 62, thereby drawing air out of the storage container 10 through the air-pumping hole 622 of the piston seat 62, and a negative pressure is thus created in the storage container 10.

Further, as illustrated in Fig. 17, the rotary device (motor module) 1 is electrically connected to a power supply module 12 (for example, battery set). The power supply module 12 is electrically coupled to a switch control module 13 that controls on/off of the rotary device (motor module) 1.

The other structural details and technical features are same as the aforesaid first embodiment. The only difference between the aforesaid first embodiment and this second embodiment is the use of a motor module for the rotary device 1. Since the contents of the second embodiment are the same as those of the first embodiment, we do not repeat them.

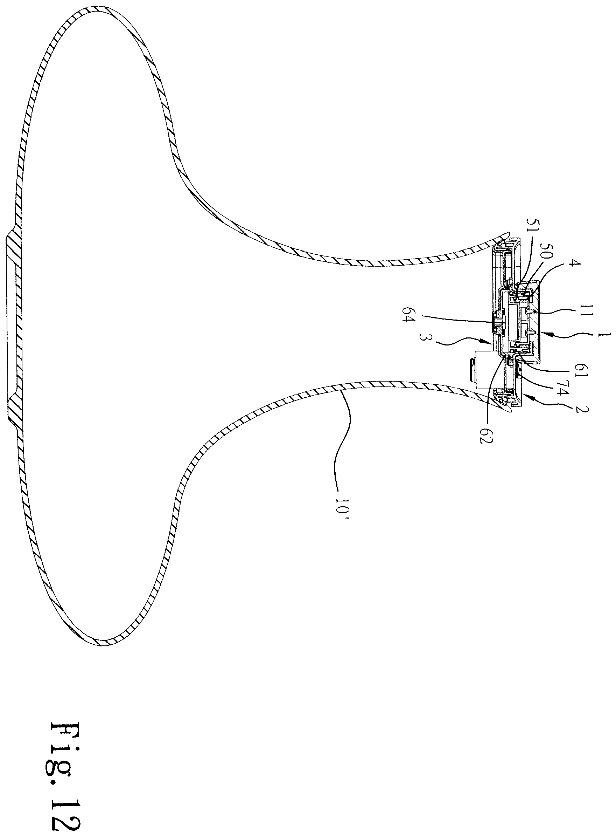

In conclusion, the invention has the features and effects as follows:
1. When rotating the rotary device 1, the mating arrangement between the guide rods 41 of the first guide block 4 and the first continuous wave-shaped track 51 of the second guide block 5 causes the second guide block 5 and the pumping piston 61 to move alternatively up and down in the piston groove 621 of the piston seat 62, thereby drawing air out of the storage container 10 to create a negative pressure is thus created in the storage container 10. Thus, the container cover of the invention has the characteristics of simple structure, space saving a wide application range.
2. The container cover can be configured for covering a vacuum storage can, vacuum storage box, vacuum storage bottle, decanter, or any of a variety of storage containers of different shapes and sizes. Fig. 12 illustrates the container cover of the present invention capped on a decanter 10'.
3. When a certain level of negative pressure is created in the storage container 10, the storage food ingredients and eatable items in the storage container 10 can be maintained fresh, avoiding ruptured storage items due to moisture or oxidation.
4. When a negative pressure is created in the storage container 10, the flexible end cap 74 of the relief valve rod 7 will curve down, giving a visual indication of the presence of a negative pressure in the storage container 10; the flexible end cap 74 can be configured to provide a top protrusion 741 that is at the center of the top surface of the flexible end cap 74 and made of a different material in a different color relative to the flexible end cap 74, enhancing the negative pressure identification indication effect.

## Claims

1. A container cover, comprising a rotary device (1), an inner cover member (3), a pumping piston (61), a piston seat (62), and a check valve (64), wherein:
the container cover having a packing gasket (30) adapted for sealing a container (10) in an airtight manner;
said pumping piston (61) is adapted for reciprocation in a piston groove (621) of said piston seat (62) axially of said cover member for vertical movement and an external mounting groove (5) extended around the periphery thereof and mounted with a first gasket ring (612);
said piston seat (62) is fixedly fastened to said cover member, comprising a piston groove (621) that accommodates said pumping piston (61) and allows said pumping piston (61) to reciprocate therein, a second gasket ring (612) mounted around the periphery thereof, and an air-pumping hole (622) cut through a bottom wall thereof (62);
said check valve (64) is mounted in said air-pumping hole (622) of said piston seat (62);
**characterized in that** the container further comprises an outer cover member (2), a first guide block (4), a second guide block (5), said rotary device (1) is rotatably coupled to said outer cover member (2) and fixedly connected with said first guide block (4);
said outer cover member (2) is fixedly connected to said inner cover member (3), said outer cover member (2) comprising a plurality of axially extending guide grooves (22);
said inner cover member (3) is mounted with said packing gasket (30), said packing gasket (30) being set between said inner cover member (3) and said outer cover member (2) and adapted for sealing a container (10) in an airtight manner when said outer cover member (2) is covered with said inner cover member (3) on said container (10);
said first guide block (4) comprises a plurality of guide rods (41);
said second guide block (5) is fixedly fastened to said pumping piston (61), comprising a first continuous wave-shaped track (51) disposed in contact with said guide rods (41) at a bottom side for causing said guide rods (41) to move along said first continuous wave-shaped track (51) of said second guide block (5) and said second guide block (5) to move up and down when said first guide block (51) is rotated by said rotary device (1), said first continuous wave-shaped track (51) of said second guide block (5) comprising a plurality of low-elevation points (511) and a plurality of high-elevation points (512), each said low-elevation point (511) of said first continuous wave-shaped track (51) rising gradually to one respective said high-elevation points (512) of said first continuous wave-shaped track (51), each said high-elevation point (512) of said first continuous wave-shaped track (51) descending gradually to one respective said low-elevation point (511) of said first continuous wave-shaped track (51);
the pumping piston (61) comprising a plurality of constraint blocks (613) respectively coupled to said axially extending guide grooves (22);
when said rotary device (1) is driven by an external force to rotate said first guide block (4), said guide rods (41) are moved along said first continuous wave-shaped track (51), causing said second guide block (5) and said pumping piston (61) to move alternatively up and down in said piston groove (612) of said piston seat (62) and to further pump air out of said container (10) through said air-pumping hole (622) of said piston seat (62);
wherein the container cover further comprises an upper rail seat (50), said upper rail seat (50) is fixedly fastened to said second guide block (5) and said pumping piston (61), said upper rail seat (50) comprising a second continuous wave-shaped track (501) disposed in contact with said guide rods (41) of said first guide block (4) at a top side, said second continuous wave-shaped track (501) of said upper rail seat (50) comprising a plurality of low-elevation points (511) and a plurality of high-elevation points (512), each said low-elevation point (511) of said second continuous wave-shaped track (501) rising gradually to one respective said high-elevation points (512) of said second continuous wave-shaped track (501), each said high-elevation point (512) of said second continuous wave-shaped track (501) descending gradually to one respective said low-elevation point (511) of said second continuous wave-shaped track (501).

2. The container cover as claimed in claim 1, wherein the container cover further comprises a first spring member (63) supported between the pumping piston (61) and the piston groove (621) of the piston seat (62) to balance the axial movement of the pumping piston (61).

3. The container cover as claimed in claim 2, wherein said outer cover member (2) further comprises a relief hole (71); said inner cover member (3) further comprises a through hole (32) corresponding to said relief hole (21); the container cover further comprises a relief valve rod (7) mounted with a gasket ring (71) and alternatively movable back and forth to close or open said relief hole (21) of said outer cover member (2), a second spring member (70) mounted between said relief valve rod (7) and said relief hole (21) of said outer cover member (2) and adapted for imparting an elastic restoring energy to said relief valve rod (7) to force the said gasket ring (71) at said relief valve rod (7) into tightly abutment against said relief hole (21) of said outer cover member (2) when said container cover is capped on said container (10) and a negative pressure is created in said container (10); when said relief valve rod (7) is pressed down by an external force, a gap is created between the said gasket ring (71) at said relief valve rod (7) and said relief hole (21) of said outer cover member (2) for discharge of said negative pressure; when the applied force is released from the said relief valve rod (7) at said relief valve rod (7), the elastic restoring energy of said second spring member (70) immediately pushes said relief valve rod (7) upward to force the said gasket ring (71) at said relief valve rod (7) to stop said relief hole (21), said relief valve rod (7) having an internal channel extending through opposing top and bottom ends thereof, said internal channel (73) having the bottom end thereof disposed in communication with said relief hole of said outer cover member and the opposing top end thereof mounted with a flexible end cap (74), said flexible end cap (74) being caused to curve down when a negative pressure is created in said container (10) after said container cover covered said container (10), said flexible end cap (74) having a top protrusion (741) made of a different material or a different color relative to the body of said flexible end cap (74) for quick visual identification of the presence of a negative pressure in said container (10).

4. The container cover as claimed in claim 2, wherein said piston seat (62) further comprises a relief hole (620); the container cover further comprises a relief valve rod (7) mounted with a gasket ring (71) and alternatively movable back and forth to close or open said relief hole (620) of said outer cover member (2), a second spring member (70) mounted between said relief valve rod (7) and said relief hole (620) of said piston seat (62) and adapted for imparting an elastic restoring energy to said relief valve rod (7) to force the said gasket ring (71) at said relief valve rod (7) into tightly abutment against said relief hole (620) of said piston seat (62) when said container cover is capped on said container and a negative pressure is created in said container (10); when said relief valve rod (7) is pressed down by an external force, a gap is created between the said gasket ring (71) at said relief valve rod (620) and said relief hole (620) of said piston seat (62) for discharge of said negative pressure. when the applied force is released from the said relief valve rod (7) at said relief valve rod (7), the elastic restoring energy of said second spring member (70) immediately pushes said relief valve rod (7) upward to force the said gasket ring (71) at said relief valve rod (7) to stop said relief hole (620), said relief valve rod (7) having an internal channel (73) extending through opposing top and bottom ends thereof, said internal channel (73) having the bottom end thereof disposed in communication with said relief hole (620) of said piston seat (62) and the opposing top end thereof mounted with a flexible end cap (74), said flexible end cap (74) being caused to curve down when a negative pressure is created in said container (10) after said container cover covered said container (10), said flexible end cap (74) having a top protrusion (741) made of a different material or a different color relative to the body of said flexible end cap (74) for quick visual identification of the presence of a negative pressure in said container (10).

5. The container cover as claimed in claim 1, wherein said rotary device (1) comprises a motor module coupled with said first guide block (4), a power supply module (12) electrically coupled to said motor module, and a switch control module (13) electrically coupled to said power supply module (12) for controlling on/off of said motor module (1).

## Patentansprüche

1. - Behälterdeckel, umfassend eine Drehvorrichtung (1), ein inneres Deckelelement (3), einen Pumpenkolben (61), einen Kolbensitz (62) und ein Rückschlagventil (64), wobei
der Behälterdeckel eine Packungsdichtung (30) aufweist, die ausgelegt ist, um einen Behälter (10) auf eine luftdichte Weise abzudichten;
der Pumpenkolben (61) ausgelegt ist, um sich in einer Kolbennut (621) des Kolbensitzes (62) axial von dem Deckelelement zur vertikalen Bewegung und einer äußeren Montagenut (5), die sich um den Umfang davon erstreckt und mit einem ersten Dichtring (612) montiert ist, hin und her zu bewegen,
der Kolbensitz (62) fest an das Deckelelement befestigt ist, umfassend eine Kolbennut (621), die den Pumpenkolben (61) aufnimmt und ermöglicht, dass sich der Pumpenkolben (61) darin hin und her bewegt, einen zweiten Dichtungsring (612), der um den Umfang davon montiert ist, und ein Luftpumpenloch (622), das durch eine untere Wand davon (62) geschnitten ist;
das Rückschlagventil (64) in dem Luftpumpenloch (622) des Kolbensitzes (62) montiert ist;
**dadurch gekennzeichnet, dass** der Behälter weiter ein äußeres Deckelelement (2), einen ersten Führungsblock (4), einen zweiten Führungsblock (5) umfasst, die Drehvorrichtung (1) drehbar mit dem äußeren Deckelelement (2) gekoppelt und fest mit dem ersten Führungsblock (4) verbunden ist;
das äußere Deckelelement (2) fest mit dem inneren Deckelelement (3) verbunden ist, wobei das äußere Deckelelement (2) eine Vielzahl von sich axial erstreckenden Führungsnuten (22) umfasst;
das innere Deckelelement (3) mit der Packungsdichtung (30) montiert ist, wobei die Packungsdichtung (30) zwischen dem inneren Deckelelement (3) und dem äußeren Deckelelement (2) angeordnet und ausgelegt ist, um einen Behälter (10) auf eine luftdichte Weise abzudichten, wenn das äußere Deckelelement (2) mit dem inneren Deckelelement (3) auf dem Behälter (10) abgedeckt ist;
der erste Führungsblock (4) eine Vielzahl von Führungsstangen (41) umfasst;
der zweite Führungsblock (5) fest mit dem Pumpenkolben (61) befestigt ist, umfassend eine erste kontinuierliche wellenförmige Spur (51), die in Kontakt mit den Führungsstangen (41) an einer unteren Seite angeordnet ist, um zu verursachen, dass sich die Führungsstangen (41) entlang der ersten kontinuierlichen wellenförmigen Spur (51) des zweiten Führungsblocks (5) bewegen, und sich der zweite Führungsblock (5) auf und ab bewegt, wenn der erste Führungsblock (51) durch die Drehvorrichtung (1) gedreht wird, wobei die erste kontinuierliche wellenförmige Spur (51) des zweiten Führungsblocks (5) eine Vielzahl von Punkten mit geringer Erhebung (511) und eine Vielzahl von Punkten mit starker Erhebung (512) umfasst, wobei sich jeder der Punkte mit geringer Erhebung (511) der ersten kontinuierlichen wellenförmigen Spur (51) allmählich zu einem entsprechenden der Punkte mit starker Erhebung (512) der ersten kontinuierlichen wellenförmigen Spur (51) erhöht, wobei sich jeder Punkt mit starker Erhebung (512) der ersten kontinuierlichen wellenförmigen Spur (51) allmählich zu einem entsprechenden der Punkte mit geringer Erhebung (511) der ersten kontinuierlichen wellenförmigen Spur (51) absenkt;
wobei der Pumpenkolben (61) eine Vielzahl von Beschränkungsblöcken (613) umfasst, die jeweils mit den sich axial erstreckenden Führungsnuten (22) gekoppelt sind;
wenn die Drehvorrichtung (1) durch eine äußere Kraft angetrieben wird, um den ersten Führungsblock (4) zu drehen, die Führungsstangen (41) entlang der ersten kontinuierlichen wellenförmigen Spur (51) bewegt werden, und verursachen, dass sich der zweite Führungsblock (5) und der Pumpenkolben (61) alternativ in der Kolbennut (612) des Kolbensitzes auf und ab bewegen, und weiter Luft aus dem Behälter (10) durch das Luftpumpenloch (622) des Kolbensitzes (62) pumpen;
wobei der Behälterdeckel weiter einen oberen Schienensitz (50) umfasst, der obere Schienensitz (50) fest mit dem zweiten Führungsblock (5) und dem Pumpenkolben (61) befestigt ist, wobei der obere Schienensitz (50) eine zweite kontinuierliche wellenförmige Spur (501) umfasst, die in Kontakt mit den Führungsstangen (41) des ersten Führungsblocks (4) an der oberen Seite angeordnet ist, wobei die zweite kontinuierliche wellenförmige Spur (501) des oberen Schienensitzes (50) eine Vielzahl von Punkten mit geringer Erhebung (511) und eine Vielzahl von Punkten mit starker Erhebung (512) umfasst, wobei sich der Punkt mit geringer Erhebung (511) der zweiten kontinuierlichen wellenförmigen Spur (501) allmählich zu einem entsprechenden der Punkte mit starker Erhebung (512) der zweiten kontinuierlichen wellenförmigen Spur (501) erhöht, wobei sich jeder Punkt mit starker Erhebung (512) der zweiten kontinuierlichen wellenförmigen Spur (501) allmählich zu einem entsprechenden der Punkte mit geringer Erhebung (511) der zweiten kontinuierlichen wellenförmigen Spur (501) absenkt.

2. - Behälterdeckel nach Anspruch 1, wobei der Behälterdeckel weiter ein erstes Federelement (63) umfasst, das zwischen dem Pumpenkolben (61) und der Kolbennut (621) des Kolbensitzes (62) getragen wird, um die axiale Bewegung der Pumpenkolbens (61) auszugleichen.

3. - Behälterdeckel nach Anspruch 2, wobei das äußere Deckelelement (2) weiter ein Entlastungsloch (71) umfasst, das innere Deckelelement (3) weiter ein Durchgangsloch (32) umfasst, das dem Entlastungsloch (21) entspricht; der Behälter weiter eine Entlastungsventilstange (7) umfasst, die mit einem Dichtungsring (71) montiert ist und alternativ vor und zurück bewegt werden kann, um das Entlastungsloch (21) des äußeren Deckelelements (2) zu schließen oder zu öffnen, ein zweites Federelement (70), das zwischen der Entlastungsventilstange (7) und dem Entlastungsloch (21) des äußeren Deckelelements (2) montiert und ausgelegt ist, um eine elastische Wiederherstellungsenergie auf die Entlastungsventilstange (7) auszuüben, um den Dichtungsring (71) an der Entlastungsventilstange (7) in dichten Anschlag gegen das Entlastungsloch (21) des äußeren Deckelelements (2) zu zwingen, wenn der Behälterdeckel auf den Behälter (10) aufgesetzt ist und ein Unterdruck in dem Behälter (10) erzeugt wird; wenn die Entlastungsventilstange (7) durch eine externe Kraft nach unten gedrückt wird, eine Lücke zwischen dem Dichtungsring (71) an der Entlastungsventilstange (7) und dem Entlastungsloch (21) des äußeren Deckelelements (2) erzeugt wird, um den Unterdruck abzuführen; wenn die aufgebrachte Kraft vom der Entlastungsventilstange (7) an der Entlastungsventilstange (7) freigesetzt wird, die elastische Wiederherstellungsenergie des zweiten Federelements (70) unmittelbar die Entlastungsventilstange (7) nach oben schiebt, um den Dichtungsring (71) an der Entlastungsventilstange (7) zu zwingen, das Entlastungsloch (21) zu stoppen, wobei die Entlastungsventilstange (7) einen inneren Kanal aufweist, der sich durch gegenüberliegende obere und untere Enden davon erstreckt, wobei das untere Ende des inneren Kanals (73) in Kommunikation mit dem Entlastungsloch des äußeren Deckelelements angeordnet ist und das gegenüberliegende obere Ende davon mit einer flexiblen Endkappe (74) montiert ist, wobei die flexible Endkappe (74) veranlasst wird, sich nach unten zu biegen, wenn ein Unterdruck in dem Behälter (10) erzeugt wird, nachdem der Behälterdeckel den Behälter (10) abgedeckt hat, wobei die flexible Endkappe (74) einen oberen Vorsprung (741) aufweist, der aus einem verschiedenen Material oder einer verschiedenen Farbe mit Bezug auf den Körper der flexiblen Endkappe (74) hergestellt ist, um die Anwesenheit eines Unterdrucks in dem Behälter (10) schnell visuell zu identifizieren.

4. - Behälterdeckel nach Anspruch 2, wobei der Kolbensitz (62) weiter ein Entlastungsloch (620) umfasst; der Behälterdeckel weiter eine Entlastungsventilstange (7) umfasst, die mit einem Dichtungsring (71) montiert und alternativ vor und zurück bewegt werden kann, um das Entlastungsloch (620) des äußeren Deckelelements (2) zu schließen oder zu öffnen, ein zweites Federelement (70), das zwischen der Entlastungsventilstange (7) und dem Entlastungsloch (620) des Kolbensitzes (62) montiert und ausgelegt ist, um eine elastische Wiederherstellungsenergie auf die Entlastungsventilstange (7) auszuüben, um den Dichtungsring (71) an der Entlastungsventilstange (7) in dichten Anschlag gegen das Entlastungsloch (620) des Kolbensitzes (62) zu zwingen, wenn der Behälterdeckel auf den Behälter (10) aufgesetzt ist und ein Unterdruck in dem Behälter (10) erzeugt wird; wenn die Entlastungsventilstange (7) durch eine externe Kraft nach unten gedrückt wird, eine Lücke zwischen dem Dichtungsring (71) an der Entlastungsventilstange (620) und dem Entlastungsloch (620) des Kolbensitzes (62) erzeugt wird, um den Unterdruck abzuführen; wenn die aufgebrachte Kraft von der Entlastungsventilstange (7) an der Entlastungsventilstange (7) freigesetzt wird, die elastische Wiederherstellungsenergie des zweiten Federelements (70) unmittelbar die Entlastungsventilstange (7) nach oben schiebt, um den Dichtungsring (71) an der Entlastungsventilstange (7) zu zwingen, das Entlastungsloch (620) zu stoppen, wobei die Entlastungsventilstange (7) einen inneren Kanal (73) aufweist, der sich durch die gegenüberliegenden oberen und unteren Enden davon erstreckt, wobei ein unteres Ende des inneren Kanals (73) in Kommunikation mit dem Entlastungsloch (620) des Kolbensitzes (62) angeordnet ist und das gegenüberliegende obere Ende davon mit einer flexiblen Endkappe (74) montiert ist, wobei die flexible Endkappe (74) veranlasst wird, sich nach unten zu biegen, wenn ein Unterdruck in dem Behälter (10) erzeugt wird, nachdem der Behälterdeckel den Behälter (10) abgedeckt hat, wobei die flexible Endkappe (74) einen oberen Vorsprung (741) aufweist, der aus einem verschiedenen Material oder einer verschiedenen Farbe mit Bezug auf den Körper der flexiblen Endkappe (74) hergestellt ist, um die Anwesenheit eines Unterdrucks in dem Behälter (10) schnell visuell zu identifizieren.

5. - Behälterdeckel nach Anspruch 1, wobei die Drehvorrichtung (1) ein Motormodul umfasst, das mit dem ersten Führungsblock (4) gekoppelt ist, ein Stromversorgungsmodul (12), das elektrisch mit dem Motormodul gekoppelt ist, und ein Schaltersteuerungsmodul (13) das elektrisch mit dem Stromversorgungsmodul(12) gekoppelt ist, um das Ein/Aus des Motormoduls (1) zu steuern.

## Revendications

1. - Couvercle de récipient, comprenant un dispositif rotatif (1), un élément de couvercle intérieur (3), un piston de pompage (61), un siège de piston (62) et un clapet de non-retour (64), dans lequel :
le couvercle de récipient a un joint d'étanchéité (30) conçu pour sceller un récipient (10) d'une manière étanche à l'air ;
ledit piston de pompage (61) est conçu pour réaliser un mouvement de va-et-vient dans une rainure de piston (621) dudit siège de piston (62) axialement par rapport audit élément de couvercle pour un mouvement vertical et une rainure de montage externe (5) s'étendant autour de la périphérie de celui-ci et munie d'une première bague d'étanchéité (612) ;
ledit siège de piston (62) est solidement fixé audit élément de couvercle, comprenant une rainure de piston (621) qui reçoit ledit piston de pompage (61) et permet audit piston de pompage (61) de réaliser un mouvement de va-et-vient à l'intérieur de celle-ci, une seconde bague d'étanchéité (612) montée autour de la périphérie de celui-ci, et un trou de pompage d'air (622) découpé à travers une paroi inférieure de celui-ci (62) ;
ledit clapet de non-retour (64) est monté dans ledit trou de pompage d'air (622) dudit siège de piston (62) ;
**caractérisé par le fait que** le récipient comprend en outre un élément de couvercle externe (2), un premier bloc de guidage (4), un second bloc de guidage (5), ledit dispositif rotatif (1) est couplé de manière rotative audit élément de couvercle externe (2) et solidement relié audit premier bloc de guidage (4) ;
ledit élément de couvercle externe (2) est solidement relié audit élément de couvercle interne (3), ledit élément de couvercle externe (2) comprenant une pluralité de rainures de guidage s'étendant axialement (22) ;
ledit élément de couvercle interne (3) est muni dudit joint d'étanchéité (30), ledit joint d'étanchéité (30) étant placé entre ledit élément de couvercle interne (3) et ledit élément de couvercle externe (2) et conçu pour sceller un récipient (10) d'une manière étanche à l'air lorsque ledit élément de couvercle externe (2) est amené à recouvrir, avec ledit élément de couvercle interne (3), ledit récipient (10) ;
ledit premier bloc de guidage (4) comprend une pluralité de tiges de guidage (41) ;
ledit second bloc de guidage (5) est solidement fixé audit piston de pompage (61), comprenant une première piste continue en forme d'onde (51) disposée en contact avec lesdites tiges de guidage (41) sur un côté inférieur pour amener lesdites tiges de guidage (41) à se déplacer le long de ladite première piste continue en forme d'onde (51) dudit second bloc de guidage (5) et ledit second bloc de guidage (5) à se déplacer vers le haut et vers le bas lorsque ledit premier bloc de guidage (51) est mis en rotation par ledit dispositif rotatif (1), ladite première piste continue en forme d'onde (51) dudit second bloc de guidage (5) comprenant une pluralité de points de hauteur basse (511) et une pluralité de points de hauteur élevée (512), chacun desdits points de hauteur basse (511) de ladite première piste continue en forme d'onde (51) s'élevant progressivement jusqu'à l'un desdits points de hauteur élevée respectifs (512) de ladite première piste continue en forme d'onde (51), chaque point de hauteur élevée (512) de ladite première piste continue en forme d'onde (51) descendant progressivement jusqu'à l'un desdits points de hauteur basse respectifs (511) de ladite première piste continue en forme d'onde (51) ;
le piston de pompage (61) comprenant une pluralité de blocs de contrainte (613) couplés respectivement auxdites rainures de guidage s'étendant axialement (22) ;
lorsque ledit dispositif rotatif (1) est entraîné par une force externe pour faire tourner ledit premier bloc de guidage (4), lesdites tiges de guidage (41) sont déplacées le long de ladite première piste continue en forme d'onde (51), amenant ledit second bloc de guidage (5) et ledit piston de pompage (61) à se déplacer alternativement vers le haut et vers le bas dans ladite rainure de piston (612) dudit siège de piston (62) et à pomper davantage d'air hors dudit récipient (10) à travers ledit trou de pompage d'air (622) dudit siège de piston (62) ;
le couvercle de récipient comprenant en outre un siège de rail supérieur (50), ledit siège de rail supérieur (50) étant solidement fixé audit second bloc de guidage (5) et audit piston de pompage (61), ledit siège de rail supérieur (50) comprenant une seconde piste continue en forme d'onde (501) disposée en contact avec lesdites tiges de guidage (41) dudit premier bloc de guidage (4) sur un côté supérieur, ladite seconde piste continue en forme d'onde (501) dudit siège de rail supérieur (50) comprenant une pluralité de points de hauteur basse (511) et une pluralité de points de hauteur élevée (512), chaque point de hauteur basse (511) de ladite seconde piste continue en forme d'onde (501) s'élevant progressivement jusqu'à l'un desdits points de hauteur élevée respectifs (512) de ladite seconde piste continue en forme d'onde (501), chaque point de hauteur élevée (512) de ladite seconde piste continue en forme d'onde (501) descendant progressivement jusqu'à l'un desdits points de hauteur basse respectifs (511) de ladite seconde piste continue en forme d'onde (501).

2. - Couvercle de récipient selon la revendication 1, le couvercle de récipient comprenant en outre un premier élément ressort (63) supporté entre le piston de pompage (61) et la rainure de piston (621) du siège de piston (62) pour équilibrer le mouvement axial du piston de pompage (61) .

3. - Couvercle de récipient selon la revendication 2, dans lequel ledit élément de couvercle externe (2) comprend en outre un trou de décharge (71) ; ledit élément de couvercle interne (3) comprend en outre un trou traversant (32) correspondant audit trou de décharge (21) ; le couvercle de récipient comprend en outre une tige de soupape de décharge (7) munie d'une bague d'étanchéité (71) et mobile alternativement en va-et-vient pour fermer ou ouvrir ledit trou de décharge (21) dudit élément de couvercle externe (2), un second élément ressort (70) monté entre ladite tige de soupape de décharge (7) et ledit trou de décharge (21) dudit élément de couvercle externe (2) et conçu pour communiquer une énergie de rappel élastique à ladite tige de soupape de décharge (7) pour forcer ladite bague d'étanchéité (71) à ladite tige de soupape de décharge (7) à venir étroitement en butée contre ledit trou de décharge (21) dudit élément de couvercle externe (2) lorsque ledit couvercle de récipient est fermé sur ledit récipient (10) et qu'une pression négative est créée dans ledit récipient (10) ; lorsque ladite tige de soupape de décharge (7) est pressée vers le bas par une force externe, un intervalle est créé entre ladite bague d'étanchéité (71) à ladite tige de soupape de décharge (7) et ledit trou de décharge (21) dudit élément de couvercle externe (2) pour une décharge de ladite pression négative ; lorsque la force appliquée est libérée de ladite tige de soupape de décharge (7) à ladite tige de soupape de décharge (7), l'énergie de rappel élastique dudit second élément ressort (70) pousse immédiatement ladite tige de soupape de décharge (7) vers le haut pour forcer ladite bague d'étanchéité (71) à ladite tige de soupape de décharge (7) à fermer ledit trou de décharge (21), ladite tige de soupape de décharge (7) ayant un canal interne s'étendant à travers des extrémités supérieure et inférieure opposées de celle-ci, ledit canal interne (73) ayant son extrémité inférieure disposée en communication avec ledit trou de décharge dudit élément de couvercle externe et son extrémité supérieure opposée munie d'un capuchon d'extrémité souple (74), ledit capuchon d'extrémité souple (74) étant amené à s'incurver vers le bas lorsqu'une pression négative est créée dans ledit récipient (10) une fois que ledit couvercle de récipient recouvre ledit récipient (10), ledit capuchon d'extrémité souple (74) ayant une saillie supérieure (741) faite d'un matériau différent ou d'une couleur différente par rapport au corps dudit capuchon d'extrémité souple (74) pour une identification visuelle rapide de la présence d'une pression négative dans ledit récipient (10).

4. - Couvercle de récipient selon la revendication 2, dans lequel ledit siège de piston (62) comprend en outre un trou de décharge (620) ; le couvercle de récipient comprend en outre une tige de soupape de décharge (7) munie d'une bague d'étanchéité (71) et mobile alternativement en va-et-vient pour fermer ou ouvrir ledit trou de décharge (620) dudit élément de couvercle externe (2), un second élément ressort (70) monté entre ladite tige de soupape de décharge (7) et ledit trou de décharge (620) dudit siège de piston (62) et conçu pour communiquer une énergie de rappel élastique à ladite tige de soupape de décharge (7) pour forcer ladite bague d'étanchéité (71) à ladite tige de soupape de décharge (7) à venir étroitement en butée contre ledit trou de décharge (620) dudit siège de piston (62) lorsque ledit couvercle de récipient est fermé sur ledit récipient et qu'une pression négative est créée dans ledit récipient (10) ; lorsque ladite tige de soupape de décharge (7) est pressée vers le bas par une force externe, un intervalle est créé entre ladite bague d'étanchéité (71) à ladite tige de soupape de décharge (620) et ledit trou de décharge (620) dudit siège de piston (62) pour une décharge de ladite pression négative, lorsque la force appliquée est libérée de ladite tige de soupape de décharge (7) à ladite tige de soupape de décharge (7), l'énergie de rappel élastique dudit second élément ressort (70) pousse immédiatement ladite tige de soupape de décharge (7) vers le haut pour forcer ladite bague d'étanchéité (71) à ladite tige de soupape de décharge (7) à fermer ledit trou de décharge (620), ladite tige de soupape de décharge (7) ayant un canal interne (73) s'étendant à travers des extrémités supérieure et inférieure opposées de celle-ci, ledit canal interne (73) ayant son extrémité inférieure disposée en communication avec ledit trou de décharge (620) dudit siège de piston (62) et son extrémité supérieure opposée munie d'un capuchon d'extrémité souple (74), ledit capuchon d'extrémité souple (74) étant amené à s'incurver vers le bas lorsqu'une pression négative est créée dans ledit récipient (10) une fois que ledit couvercle de récipient recouvre ledit récipient (10), ledit capuchon d'extrémité souple (74) ayant une saillie supérieure (741) faite d'un matériau différent ou d'une couleur différente par rapport au corps dudit capuchon d'extrémité souple (74) pour une identification visuelle rapide de la présence d'une pression négative dans ledit récipient (10).

5. - Couvercle de récipient selon la revendication 1, dans lequel ledit dispositif rotatif (1) comprend un module de moteur couplé audit premier bloc de guidage (4), un module d'alimentation électrique (12) couplé électriquement audit module de moteur, et un module de commande de commutateur (13) couplé électriquement audit module d'alimentation électrique (12) pour commander la marche/arrêt dudit module de moteur (1).
